# EUROPÄISCHE PATENTSCHRIFT

(11) **EP 1 610 887 B1**
(45) Veröffentlichungstag und Bekanntmachung des Hinweises auf die Patenterteilung: **22.07.2009**
(21) Anmeldenummer: 04722252.6
(22) Anmeldetag: 22.03.2004
(51) Int. Cl.: B01F 3/04

(54) **VERFAHREN ZUR REGENERIERUNG VON WASSER MIT EINER SAUERSTOFFARMEN ATMOSPHÄRE**
METHOD FOR REGENERATING WATER HAVING A LOW-OXYGEN ATMOSPHERE
PROCEDE DE REGENERATION D'EAU AYANT UNE ATMOSPHERE PAUVRE EN OXYGENE

(30) Priorität: 22.03.2003 DE 10312827
(43) Veröffentlichungstag der Anmeldung: 04.01.2006
(73) Patentinhaber: Koopmann, Alfons, 26169 Friesoythe (DE)
(72) Erfinder: Koopmann, Alfons, 26169 Friesoythe (DE)
(74) Vertreter: Eisenführ, Speiser & Partner
(86) Internationale Anmeldenummer: PCT/EP2004/002970
(87) Internationale Veröffentlichungsnummer: WO 2004/082816

(56) Entgegenhaltungen:
- EP-A- 0 201 310
- EP-A- 0 963 784
- EP-A- 1 145 757
- US-A- 5 766 477

## Beschreibung

Die Erfindung betrifft ein Verfahren zur Regenerierung von Wasser oder anderen Flüssigkeiten mit einer sauerstoffarmen Atmosphäre.

Aus US 5,766,477 ist ein Verfahren zur Behandlung eines flüssigen, reaktiven Mediums, z. B, Wasser, bekannt. Aus EP-A-1145757 ist eine Vorrichtung zur Gas-/Flüssigkejtsbehandlung bekannt, aus EP-A-0201310 ist eine Einrichtung für ein Verfahren zur Reinigung von Flüssigkeiten bekannt und aus WO 98146340 ist ein System und ein Verfahren zur Gas-Saturierung einer Flüssigkeit bekannt.

Während im Stand der Technik häufig ganz bestimmte Flüssigkeiten mit einem Gas angereichert werden sollen oder auch ganz bestimmte Flüssigkeiten gereinigt werden sollen, ist Ausgangspunkt der Erfindung ein bei der Verschmutzung von Gewässern sich häufig einstellendes Problem, nämlich die Sauerstoffverarmung solcher Gewässer. Insbesondere dann, wenn die Außentemperaturen ansteigen und verrottbare Schwebstoffe im Wasser sind oder das Gewässer durch Einleitung von Umweltgiften, Gülle und dergleichen hochbelastet ist, kann der Sauerstoffgehalt im Wasser innerhalb von kürzester Zeit rapide absinken, was dann regelmäßig zu einem großen Fischsterben und zu der umfassenden Vernichtung der Fauna und Flora im Gewässer führt.

Es ist zwar insbesondere aus der Fischwirtschaft durchaus bekannt, den Sauerstoffgehalt von Gewässern anzuheben, indem beispielsweise in das Gewässer Luft oder Sauerstoff durch Bläschen eingetragen oder Wasser aus dem Gewässer verwirbelt wird, welches hierbei Sauerstoff aus der Luft aufnimmt, Die bisherigen Verfahren zur Sauerstoffanreicherung und damit zur Regenerierung von Wasser sind jedoch nicht sehr effizient. So müssen beispielsweise sehr große Wassermengen verwirbelt werden oder es müssen sehr aufwendige Apparaturen verlegt werden, damit Luft oder reiner Sauerstoff in Bläschenform in das Wasser eingetragen werden kann.

Aufgabe der vorliegenden Erfindung ist es, ein Verfahren und eine Vorrichtung vorzuschlagen, die die Regenerierung von Wasser effektiver gestaltet als bisher und welche auch mobil einsetzbar sind.

Die Erfindung löst die Aufgabe mit einem Verfahren mit den Merkmalen nach Anspruch 1 sowie durch eine Vorrichtung mit den Merkmalen nach Anspruch 5. Vorteilhafte Weiterbildungen sind in den Unteransprüchen beschrieben.

Bei der Erfindung wird das zu regenerierende Wasser unter hohem Druck im Bereich von 6-20 Bar, bevorzugt 8 Bar, zusammen mit Luft bzw. Sauerstoff verwirbelt, Die hierzu benötigte Apparatur kann beispielsweise eine solche sein, welche bislang auch bereits bei Feuerlöschgeräten eingesetzt wird, um ein Schaumfeuerlöschmittel zu erzeugen. Hierbei wird Wasser mit einem Schäumer innerhalb einer Kammer verwirbelt, so dass ein sehr großes Schaumvolumen erzeugt wird.

Wird Wasser zusammen mit Luft bzw. Sauerstoff bei hohem Druck in einer Kammer verwirbelt, so entsteht nicht etwa sprudelndes Wasser, vergleichbar einem Mineralwasser mit Kohlensäure, sondern bei der richtigen Einstellung entsteht ein praktisch blasenfreies Luft-/Sauerstoffwassergemisch. Wird dieses Luft-NVassergernisch nun in das Gewässer zurückgepumpt, aus dem zuvor das sauerstoffarme Wasser entnommen wurde, kann innerhalb von kürzester Zeit, d.h. innerhalb von wenigen Stunden, bei großen Gewässern innerhalb von wenigen Tagen, der Sauerstoffgehalt des gesamten Gewässers erheblich verbessert werden.

Weil nämlich durch die Verwirbelung von Wasser mit Luft/Sauerstoff ein blasenfreies Wasser-Luft-/Sauerstoffgemisch entsteht, entweicht nicht gleichzeitig wieder der Sauerstoff aus dem Gemisch, sondern verbleibt in dem Gewässer und vermischt sich auf natürliche Weise mit dem dort vorhandenen sauerstoffarmen Wasser.

Besonders vorteilhaft ist es, wenn das Volumenverhältnis des zu mischenden Gases (also Luft oder Sauerstoff) mit der zu mischenden Flüssigkeit aus Wasser etwa im Bereich von 1 zu 2 bis 4 zu 1, bevorzugt etwa 2 zu 1, beträgt.

Zur Durchführung des Verfahrens wird nunmehr mit einer Pumpe Wasser, welches mit Sauerstoff angereichert werden soll, zu einer Verwirbelungskammer gepumpt. Das Wasser hat dort bereits einen hohen Druck von etwa 6-10 Bar, bevorzugt 8 Bar. Gleichzeitig wird in die Verwirbelungskammer auch Luft mit den entsprechenden vorgenannten Drücken eingetragen und in der Kammer wird das Wasser und die Luft (bzw. der Sauerstoff) verwirbelt, so dass sich Wasser und Luft miteinander vermischen. Das Wasser-Luft-/Sauerstoffgemisch wird über einen angeschlossenen Schlauch oder eine entsprechend angeschlossene Leitung wieder in das Gewässer zurückgeleitet bzw. gepumpt, aus dem zuvor das sauerstoffarme Wasser entnommen wurde.

Je nach Pumpleistung können entsprechende Wassermengen (oder anderen Flüssigkeiten) mit Luft bzw. Sauerstoff angereichert werden. Damit kann ein sehr großes mit Sauerstoff angereichertes Wasservolumen in das Gewässer zurückgegeben werden, welches unter Sauerstoffarmut leidet.

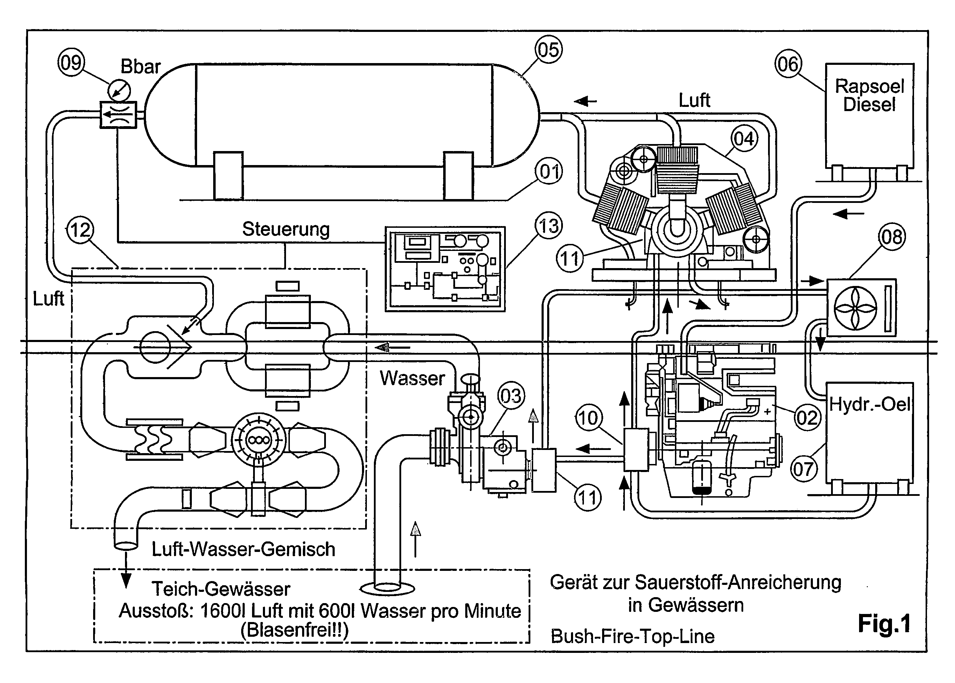

Die Figur zeigt eine Aufbauskizze mit der Einrichtung zur Mischung von Luft und Wasser. Hierbei ist zu erkennen, dass mittels eines Motors 2, insbesondere eines Rapsöldieselmotors, welcher seinen Treibstoff aus einem entsprechenden Tank 6 erhält, die notwendige Kraft bzw. Energie zur Verfügung gestellt wird, um einerseits einen Luftkompressor 4 zu bedienen und andererseits eine Kreiselpumpe, angetrieben von einem Motor 11, zu betreiben. Der Luftkompressor als auch die Kreiselpumpe werden also hydraulisch angetrieben und das hierfür benötigte Hydrauliköl ist unter anderem auch in einem Tank 7 gespeichert und das erwärmte Öl aus dem Ölkreislauf wird in einem Ölkühler 8 gekühlt.

Mittels des Luftkompressors wird Luft angesaugt und auf einen vorbestimmten Wert, z.B. 8 Bar verdichtet und verdichtete Luft wird in einem Luftbehälter 5 gespeichert. Am Ausgang des Luftbehälters ist ein Druckventil mit Manometer 9 angeordnet, so dass Luft aus dem Luftbehälter gesteuert herausgelangen kann, wobei durch die Steuerung dafür gesorgt wird, dass die Ausgangsluft stets den gewünschten Druckwert aufweist.

Mittels der Kreiselpumpe wird die anzureichernde Flüssigkeit, also z.B. Wasser aus einem Teich oder einem anderen Gewässer, angesaugt und einem Luftwasseraufbereiter 12 mit einem vorbestimmten Druck, z.B. ebenfalls 8 Bar, eingepumpt. Auch die Luft wird in diesem Luftwasseraufbereiter einer entsprechenden Leitung zugeführt. In dem Luftwasseraufbereiter gelangen Wasser und Luft in einer gemeinsamen Kammer zusammen und werden dort verwirbelt bzw. vermischt und das dann entstehende Luft-Wasser-Gemisch ist gänzlich oder weitestgehend blasenfrei und wird dann entsprechend über eine Ausgabeleitung wieder ausgestoßen.

Mittels eines Bedienfeldes 13 kann sowohl das Druckventil am Ausgang des Luftbehälters als auch ein weiteres Steuerventil, welches die Wasserzufuhr innerhalb des Luftwasseraufbereiters steuert, in der gewünschten Weise eingestellt werden.

Im dargestellten Beispiel werden etwa 16001 Luft mit etwa 8001 Wasser pro Minute blasenfrei vermischt. Selbstverständlich sind Abweichungen von diesem Zahlenbeispiel ohne weiteres möglich; so kann beispielsweise auch ein anderes Luft-Wasser-Verhältnis eingestellt werden. Mit einer vergrößerten Pumpleistung bzw. einer erhöhten Kompressorleistung können auch insgesamt die Luftwassermengen vergrößert werden.

Die gesamte Einrichtung zur Sauerstoffanreicherung einer Flüssigkeit ist äußerst kompakt und kann beispielsweise auf einem kleinen Autoanhänger untergebracht werden oder auf einem Pritschwagen mitgeführt werden, so dass die gesamte Einrichtung äußerst mobil einsetzbar ist. Auch kann die erfindungsgemäße Einrichtung zur Sauerstoffanreicherung auf einem Amphibienfahrzeug mitgeführt werden, so dass die erfindungsgemäße Einrichtung zur Sauerstoffanreicherung auch in Gebieten eingesetzt werden kann, die wegen Versumpfung oder aus anderen Gründen schlecht erreichbar sind.

Die erfindungsgemäße Einrichtung ist nicht nur geeignet, Wasser mit Sauerstoff zu regenerieren, sondern auch andere Flüssigkeiten mit einem Gas entsprechend anzureichern, wobei der Druck auf einen bestimmten Wert im Bereich von 6 bis 50 Bar einzustellen ist. Dies gilt natürlich nicht nur für den Druck der Flüssigkeit, sondern auch entsprechend für den Druck des Gases.

Neben der beschriebenen Verwirbelung von Luft bzw. Sauerstoff zur Verbesserung der Wasserqualität kann dem Wasser (also der Flüssigkeit) in der Verwirbelungskammer außer dem Gas eine weitere Komponente zugesetzt werden. Dies kann z. B. eine feste, z. B. pulverförmige, Komponente, eine flüssige Komponente oder auch eine weitere gasförmige Komponente sein. Der Zusatz einer geeigneten weiteren Komponente dient vornehmlich dazu, den vom verschmutzten Wasser ausgehenden Geruch zu verhindern oder eine Algenbildung auf das natürliche Maß einzuschränken bzw. das biologische Gleichgewicht der gesamten Flüssigkeit zu verbessern. Gleichzeitig kann aber der Zusatz einer weiteren Komponente auch dazu dienen, die Geruchsbildung zu verbessern oder der Flüssigkeit eine gewünschte Komponente zuzuführen, die für den späteren Gebrauch in der Flüssigkeit benötigt wird oder erwünscht ist.

Das vorbeschriebene Verfahren ist wie erwähnt nicht nur auf die Regenerierung von Wasser eingeschränkt, sondern kann auch für andere Zwecke verwendet werden, also immer dann, wenn eine bestimmte Menge an Gas in einer Flüssigkeit gebunden werden soll. Auch ist das erfindungsgemäße Verfahren geeignet, eine Optimierung eines Flotationsverfahrens herzustellen. Die Flotation ist ein mechanisches Verfahren zur Trennung von Fest-/Flüssigsystemen, z. B. zur Abtrennung von Schwebstoffen aus Abwässern. Dieses Flotationsverfahren ist an die optimale Erzeugung feinster bzw. feiner Gasblasen gebunden, die bei der Begasungsflotation auf mechanischem Wege gebildet werden. Dabei wird dann das zu behandelnde Wasser (Abwasser) über die Zulaufleitung in einem geeigneten Flotationsbehälter transportiert. Es wird das mit Luft (Gas) gesättigte Druckwasser (Flüssigkeit) über Düsen entspannt. Die dabei entstehenden Mikroblasen, vorzugsweise im Bereich von etwa 20 bis 100 µm, besonders vorzugsweise im Bereich von 40 bis 70 µm Durchmesser, werden intensiv mit den suspendierenden Wasserinhaltsstoffen vermischt. Es kommt zur Anlagerung der Gasblasen an die Feststoffteilchen und dadurch zur Bildung von Feststoff-Gas-Flocken, die dadurch einen Auftrieb erfahren, also leichter als das Wasser (Flüssigkeit) sind, und daher ausschwimmen und hiernach an der Oberfläche des Wassers (Flüssigkeit) abgeschöpft werden können bzw. auf sonstige Weise abgetrennt werden können.

## Patentansprüche

1. Verfahren zur Regenerierung von Wasser, welches eine sauerstoffarme Atmosphäre aufweist.
**dadurch gekennzeichnet, dass** das zu regenerierende Wasser unter einem hohen Druck im Bereich von 6 bis 20 Bar, bevorzugt 8 Bar, zusammen mit Luft bzw. Sauerstoff gleichen Drucks verwirbelt wird und durch die Verwirbelung von zu regenerierendern Wasser und Luft/Sauerstoff ein blasenfreies Wasser-Luft/Sauerstoff-Gemisch entsteht, wobei die Luft aus der Atmosphäre angesaugt wird und auf diesen vorbestimmten Druck verdichtet wird, dass das zu regenerierende Wasser aus einem Gewässer entnommen wird und das mit Luft bzw. Sauerstoff angereicherte Wasser in das Gewässer zurückgegeben wird, aus dem das Wasser zuvor entnommen wurde.

2. Verfahren nach Anspruch 1,
**dadurch gekennzeichnet, dass** das Volumenverhältnis des zu mischenden Gases, also Luft oder Sauerstoff. mit der zu mischenden Flüssigkeit aus Wasser etwa 2 : 1 beträgt.

3. Verfahren nach einem der vorhergehenden Ansprüche,
**dadurch gekennzeichnet, dass** außer der Flüssigkeit mit dem Gas eine weitere Komponente, die fester, z. B. pulverförmiger, flüssiger oder auch gasförmiger Natur sein, mit in die Verwirbelung miteinbezogen ist.

4. Verfahren nach Anspruch 3,
**dadurch gekennzeichnet, dass** die zusätzliche Komponente dazu dient, das biologische Gleichgewicht und/oder den Geruch oder das chemische und/oder physikalische Verhalten des Ausgangsprodukts zu verbessern.

5. Vorrichtung zur Durchführung des Verfahrens nach einem der vorhergehenden Ansprüche,
**dadurch gekennzeichnet, dass** mittels einer Pumpe Wasser mit zu geringem Sauerstoffgehalt und mittels einer zweiten Pumpe Luft jeweils bei dem vorbestimmten Druck von etwa 6 bis 10 Bar, bevorzugt 8 Bar, in eine Kammer bzw. einen Verwirbelungsraum eingetragen werden, wo sich das Wasser und die Luft miteinander vermischen und dass einem Verwirbelungsraum eine Ausgangsleitung angeschlossen ist, über welche das Wasser fertig luftgemischt aus dem Verwirbelungsraum ausgedrückt wird.

6. Vorrichtung nach einem der vorhergehenden Ansprüche,
**dadurch gekennzeichnet, dass** an dem Ausgang der Verwirbelungskammer ein Schlauch oder eine Leitung angeschlossen ist.

## Claims

1. A method of regenerating water which has a low-oxygen atmosphere, **characterized in that** the water to be regenerated is swirled at a high pressure in the region of from 6 to 20 bar, preferably 8 bar, together with air or oxygen at the same pressure and, as a result of the swirling of water to be regenerated and air / oxygen, a bubble-free mixture of water and air / oxygen is produced, wherein the air is drawn out of the atmosphere and is compressed to the said pre-defined pressure, the water to be regenerated is removed from a body of water, and the water enriched with air or oxygen is fed back into the body of water from which the water had previously been removed.

2. A method according to Claim 1, **characterized in that** the volume ratio of the gas to be mixed, i.e. air or oxygen, to the liquid comprising water to be mixed amounts to approximately 2 : 1.

3. A method according to one of the preceding Claims, **characterized in that**, in addition to the liquid with the gas, a further component which can be of a solid nature, for example in the form of a powder, a liquid nature or even a gaseous nature, is included in the swirling.

4. A method according to Claim 3, **characterized in that** the additional component is used to improve the biological equilibrium and/or the odour or the chemical and/or physical behaviour of the finished product.

5. An apparatus for performing the method according to any one of the preceding Claims, **characterized in that**, by means of a pump, water with an insufficient oxygen content and, by means of a second pump, air are introduced in each case at the pre-defined pressure of approximately from 6 to 10 bar, preferably 8 bar, into a chamber or a swirling chamber where the water and the air are mixed together, and an outlet line, by way of which the water mixed with air in a finished manner is forced out of the swirling chamber, is attached to the swirling chamber.

6. An apparatus according to one of the preceding Claims, **characterized in that** a hose or a line is attached to the outlet of the swirling chamber.

## Revendications

1. Procédé de régénération d'eau, qui présente une atmosphère pauvre en oxygène,
**caractérisé en ce que** l'eau à régénérer est tourbillonnée sous une haute pression située dans l'intervalle allant de 6 à 20 bar, de préférence 8 bar, avec de l'air et respectivement, de l'oxygène à la même pression, et par le tourbillon de l'eau à régénérer et l'air/oxygène, il se forme un mélange eau-air/oxygène sans bulle, où l'air est aspiré de l'atmosphère et condensé à cette pression déterminée, **en ce que** l'eau à régénérer est prélevée dans un plan d'eau et l'eau enrichie en air et en oxygène est ramenée dans le plan d'eau duquel elle a été prélevée.

2. Procédé selon la revendication 1,
**caractérisé en ce que** le rapport volumique du gaz à mélanger, à savoir l'air ou l'oxygène, au liquide à mélanger, l'eau, se situe à environ 2:1.

3. Procédé selon l'une des revendications précédentes,
**caractérisé en ce qu'**en plus du liquide avec le gaz, un autre composant, qui est de nature solide, par exemple pulvérulente, liquide ou également gazeuse, est incorporé au tourbillon.

4. Procédé selon la revendication 3,
**caractérisé en ce que** le composant supplémentaire sert à améliorer l'équilibre biologique et/ou l'odeur ou le comportement chimique et/ou physique du produit de départ.

5. Dispositif pour réaliser le procédé selon l'une des revendications précédentes,
**caractérisé en ce que** l'on introduit dans une chambre et respectivement, chambre de tourbillon, à l'aide d'une pompe, l'eau avec une faible teneur en oxygène et à l'aide d'une deuxième pompe, l'air, chaque fois à la pression déterminée d'environ 6 à 10 bar, de préférence 8 bar, où l'eau et l'air se mélangent l'un à l'autre et **en ce que** la chambre de tourbillon est raccordée à une conduite de départ, par laquelle l'eau mélangée à l'air est extraite de la chambre de tourbillon.

6. Dispositif selon l'une des revendications précédentes,
**caractérisé en ce qu'**un tuyau ou une conduite est raccordé à la sortie de la chambre de tourbillon.
